# EUROPEAN PATENT APPLICATION

(11) **EP 0 793 050 A2**
(43) Date of publication of application: **03.09.1997**
(21) Application number: 97301280.0
(22) Date of filing: 26.02.1997
(51) Int. Cl.: F16L 55/162, F16L 55/26

(54) **Methods of lining conduits and apparatus for applying the same**

(30) Priority: 27.02.1996 GB 9604091
(71) Applicant: Lippiatt, Raymond, Rainsbury, Wiltshire SN8 2RG (GB)
(72) Inventor: Lippiatt, Raymond, Rainsbury, Wiltshire SN8 2RG (GB)
(74) Representative: Heath, Peter William Murray

(57) **Abstract**

Apparatus for and a method of providing a hardenable lining to a pipeline having a leakage problem, comprising a tapered skirt device and means for moving same through the pipeline, the skirt device being arranged in use to engage with a plug of hardenable material injected into the pipeline and move upstream with respect to the outward tapering skirt, whereby to press the plug against the internal walls of the pipeline the skirt device having associated means for varying its radial diameter at its outward tapered end.

## Description

This invention relates to methods of lining conduits, for example pipes, and especially water pipes, and apparatus for applying the same.

It has previously been proposed to eliminate by cutting into a pipeline isolating say a 100-200 metre section and injecting at one end a slug of cement mortar sufficient in volume to coat the pipeline with, say, a half inch thick annular lining.

A winch wire is passed through the pipeline (and mortar) and a fixed dimensioned metal tapered skirt is attached to the end of the wire at the mortar filled end of the wire and to a winch at the opposite end.

The skirt (which at its trailing end is say 1 inch in diameter less than the pipeline) was drawn by a winch through the line, the tapered skirt during its axial travel naturally providing a pressure in its peripheral gap with the pipe, squeezing outwardly the mortar and filling gaps in the pipe wall and leaving a lined pipe behind it.

To overcome these problems it has also previously been proposed to line water pipes such as water mains by spray lining epoxy resins or alternatively by spray lining of cement mortar or a blend of resin/cement mortar.

Until recently the main reason for these latter systems has been to combat water quality problems related to contamination of the water from corrosion deposits and bacteriological formations. It is now realised that there is a real leakage problem and that neither of these systems of repair were designed to combat leakage or have any real ability to do so. Thus, such spray systems deposit an even amount of material in their travel which at any discontinuity, such as a joint or hole, is usually insufficient to withstand internal pressure.

These spray lining processes comprise a very large market proportion because of the relatively inexpensive nature of operation and application, and this proportion is likely to grow. Alternative current-day processes available utilising pre-formed liners for example are all by comparison much more expensive and currently costwise do not fall into the same market category.

Leakage is now a primary area of concern, since it is known to be the case that 80% of current-day water loss stems directly from the type of leak path to which at least some of the above mentioned earlier tapered skirt systems are directed.

However, bearing in mind internal diameter manufacturing tolerances for pipes, problems with these skirt system included serious lining thickness variations, and consistency of concentrations.

It is an object of the present invention to overcome or at least substantially reduce problems associated with such prior arrangements set out hereinabove.

According to one aspect of the present invention there is provided a method of providing a hardenable lining to a pipeline having a leakage problem comprising injecting into a length of the pipeline a plug of suitable hardenable material and passing through the pipeline from the end containing a majority of the hardenable material a skirt shaped member radially outwardly tapered in the downstream direction the trailing edge of the skirt having been adjusted to provide a predetermined annular gap with the internal wall of the pipeline.

According to another aspect of the present invention there is provided apparatus for providing a hardenable lining to a pipeline having a leakage problem, comprising a tapered skirt device and means for moving same through the pipeline, the skirt device being arranged in use to engage with a plug of hardenable material injected into the pipeline and move upstream with respect to the outward tapering skirt, whereby to press the plug against the internal walls of the pipeline the skirt device having associated means for varying its radial diameter at its outward tapered end.

With both apparatus and method of the invention, a predetermined lining thickness may be provided for the pipeline. However, by the invention depressions in the internal pipe wall, at joints and holes and other irregularities may be provided with extra lining to prevent leakage.

The suitable hardenable material may comprise any suitable material, such as a cement/mortar mix, or a polymerised cement mortar mix.

The invention may include means for varying the diameter of the downstream edge of the skirt during lining of a pipeline.

It is to be noted that most beneficially, the invention can ensure that when, during the passage of the tapered cones through the pipeline and the included slug of cement mortar, for example, passes any form of gap or depressive irregularity, the angle of the cone and the peripheral force contained within the cement mortar can combine to force mortar, into, through, and to fill gaps, holes at interstices, for example, to prevent leakage. It is to be noted that to have a skirt peripheral gap at the outermost portion of the tapered skirt, of the correct dimension relative to the pipe diameter is, to achieve the above mentioned advantage, of importance.

The invention provides the ability to produce thin, consistent thickness of pipe lining.

In order that the invention may be more readily understood, several embodiments thereof will now be described by way of example with reference to the accompanying drawings in which:-
Figure 1 shows schematically a skirt device ready for use in accordance with the invention;
Figures 2 to 4 shown schematically the application of one embodiment of the invention for use with the skirt of Figure 1;
Figures 5 to 8 show schematically the application of other embodiments of the invention;
Figures 9 and 10 illustrate schematically arrangement for containment of a slug of mortar during use of the invention; and
Figures 11 to 13 illustrate schematically different control arrangements for apparatus according to the invention.

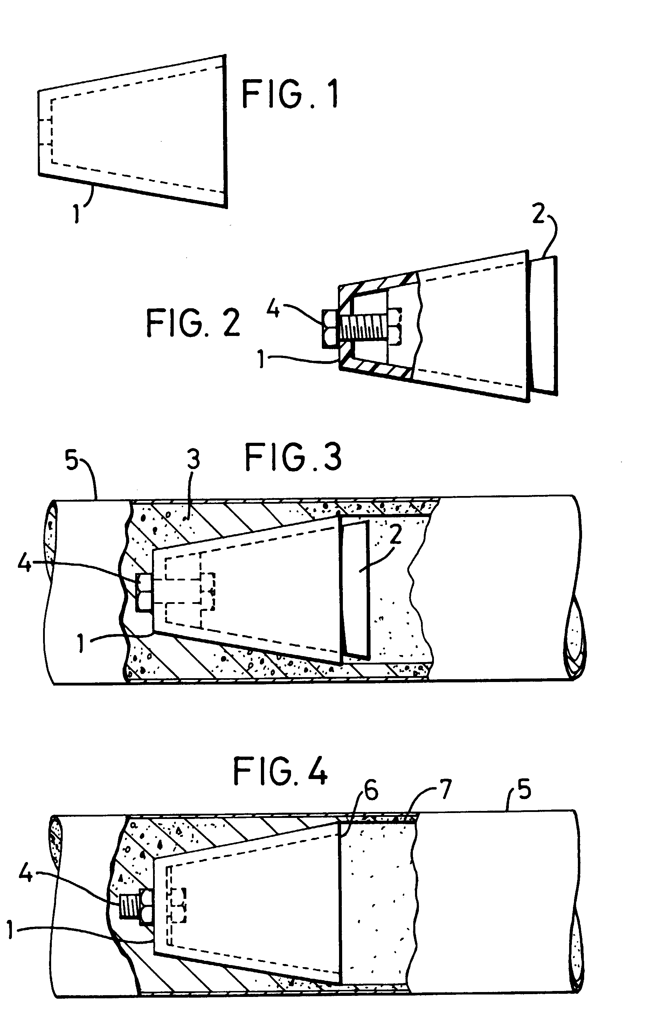

Referring now especially to Figure 1 the skirt 1 of a polyurethane or similar rubber/polymer of hard wearing quality, which is extendable to a degree, formed or moulded to produce a hollow tapered skirt. The dimension of its greater diameter is slightly less (say ¼") than the desired diameter of the finished diameter of a finally lined pipe (not shown).

The skirt is formed to a given diameter pipe (4" for example).

In one embodiment application of the invention a metal cone 2 (Figure 2) of a similar taper angle to the skirt 1 is placed partially within the skirt 1.

As can be seen in Figure 3, with the insert 2 in the position shown and with a pipe 5 of a predetermined diameter a lining 3 of the thickness shown is produced in the pipelines 5. However, by adjusting (via an adjuster 4) the position of the metal insert 2 to a fully exposed position 6 within the skirt 1 the thickness of the lining 7 is reduced to minimum, see Figure 4

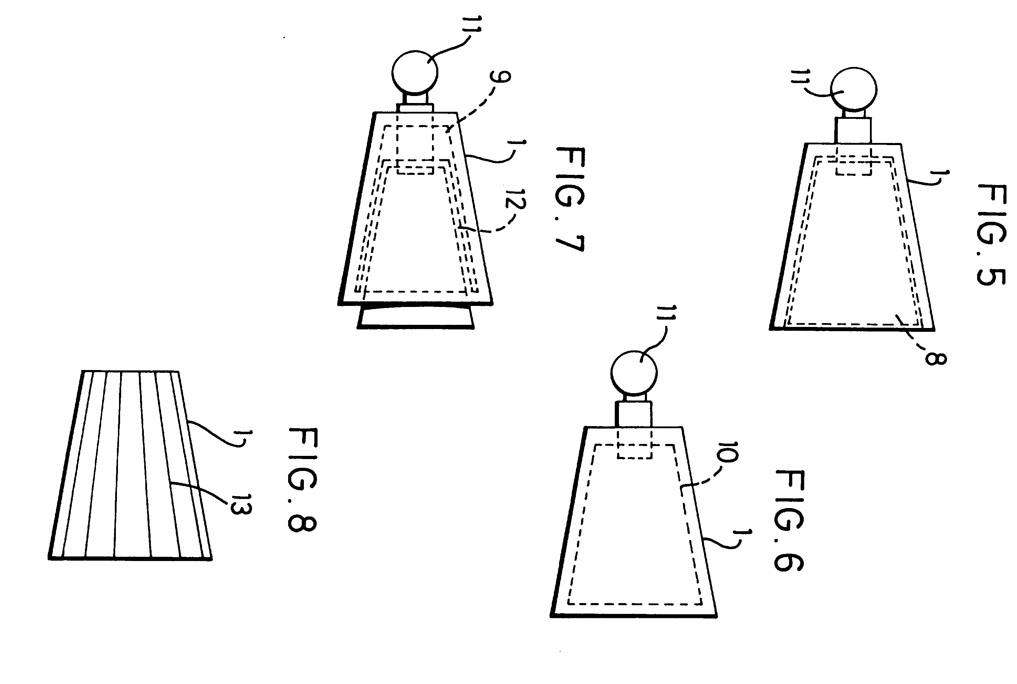

In Figure 5 there is shown diagrammatically a hydro/pneumatic insert to the skirt with a fluid inlet and outlet 11. The insert 8 may be hydro-pneumatically controlled.

Referring to Figure 6 another arrangement comprises a hollow skirt 10 which may itself be pressurised and increased or reduced in diameter.

In Figure 7 there is shown a further arrangement of a hollow-walled skirt 9 together with a metal insert 12 where both modes of adjustment discussed above can be employed.

In Figure 8 there is shown a skirt device as of any of the previously described designs for an adjustable skirt in which the actual skirt is formed from thin metal overlapping leaves 13 and may be actuated in effect similar to an Iris.

It will be understood that drawing a skirt which as illustrated is cone shaped into a reservoir of mortar within a pipe creates a pressure in the peripheral gap between the skirt and the pipe. This is brought about by :
(a) the angle of the tapered skirt and to a degree the friction coefficient of the skirt surface;
(b) the viscous resistance of the mortar slug within the pipe;
(c) the speed at which the skirt is drawn through the pipe (into the mortar slug);
(c) the gap allowed at the trailing edge which by adjustment to a lesser clearance again increases the pressure in the peripheral gap of the skirt.

Assuming that (a) and (c) above can be designed to achieve a constant result there is a variable potential connected with (b) brought about by the volume change in the mortar slug as the lining proceeds through the section to be lined, and means may be incorporated to provide a consistent lining force through a containment system.

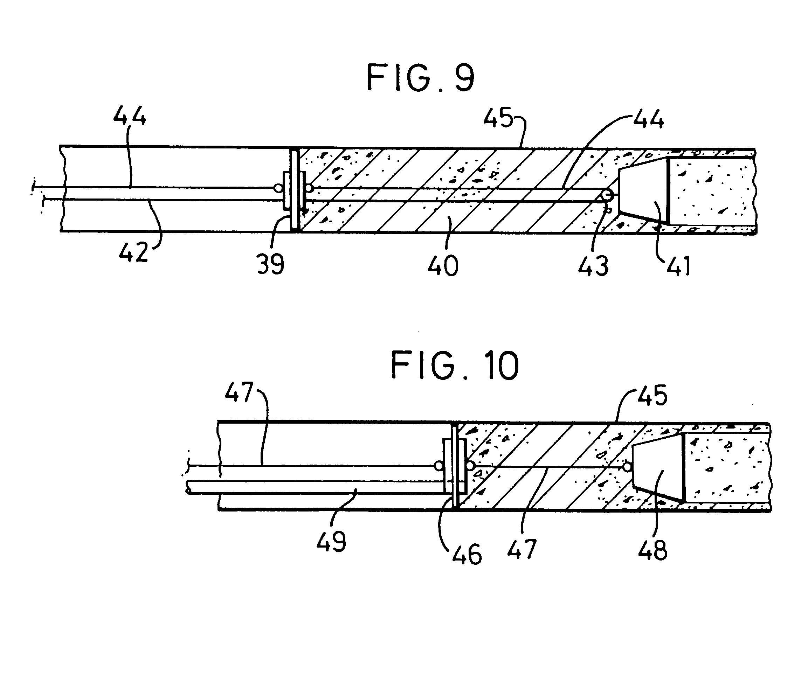

In Figure 9 a plunger 39 is positioned in front of the mortar slug 40 and as lining proceeds, it is progressively moved closer to skirt 41 thereby maintaining complete slug fill of pipe 45 in front of the skirt. The movement of the plunger 39 is effected by an adjuster wire 42 which acts through a turn block 43 progressively to reduce the length of twin wire 44 between the skirt 41 and the travelling plunger 39.

Another containment system is shown in Figure 10 where a plunger 46 is fixed to the tow wire 47 in a fixed position (say 1m) from skirt 48. The void between the plunger 46 and the skirt 48 is kept full of mortar during lining by replenishment of any used amount via a mortar feed tube 49, based on prior calculation.

It may be desirable in all arrangements of skirt hereinbefore described to use a second skirt in tandem with the single skirt previously illustrated on an either/or basis.

Arrangements may be provided for remote control of the skirt device trailing edge diameter in the context of the relevant pipe measuring device. In such an arrangement the device automatically measures the pipe diameter as it proceeds through the pipeline during the lining operation. This device may be fixed with respect to the skirt towing wire at a predetermined position in front of the skirt, say three to twenty feet. The measuring mechanism may be designed in a way to trigger automatically a force or signal to a mechanism in the skirt which increases or decreases the skirt diameter directly in relation to the measured diameters found by the measuring device during its travel through the lining section so as to achieve a lining thickness of substantially constant dimension regardless of the pipe diameter encountered.

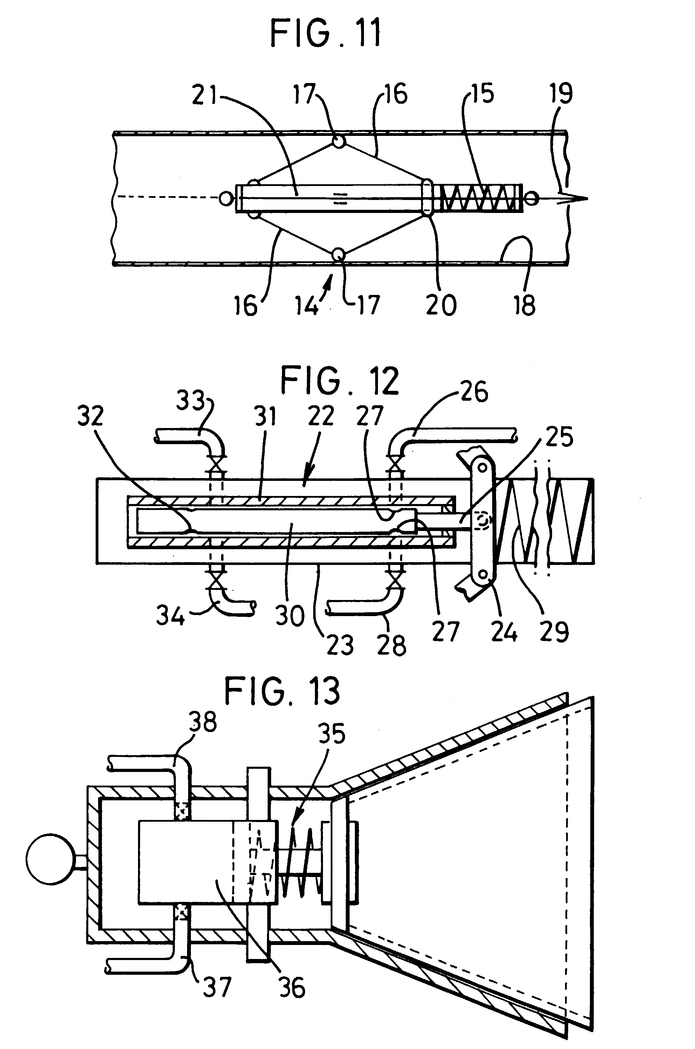

Figure 11 illustrates a measuring device 14, towed in the direction of arrow 19 which triggers a fluid pressure to the skirt (not shown) which in turn alters the skirt diameter to suit any found diameter. The diameter sensing actuating mechanism is in the form of an umbrella-like device actuating an open and close mechanism. Compression spring 15 holds, via pivot arms 16, pivot skids 17 in contact with the pipe inner wall 18. When the diameter changes perceptibly a sliding pivot 20 moves along a barrel 21 either from the spring force acting to keep the pivot skid 17 in contact with the pipe wall 18 in enlarged diameter or from the pivot skid 17 forcing the sliding pivot 20 to compress the spring 15 in reduced diameter.

Figure 12 illustrates a mechanism 22 which can replace part of the barrel 21 of Figure 11 and which resembles a ball cock valve but not only allows fluid to flow through or stop but also allows flow through, stop and exhaust. This valve is situated in barrel 23 and actuated from sliding pivot 24. The control rod 25 is actuated by sliding pivot 24 when diameter changes occur. When the pipe diameter has enlarged, a fluid inlet 26 allows fluid to move through the inlet porting 27 into supply pipe 28 to the skirt (not shown) . Conversely when the pipe diameter reduces, sliding pivot 24 moves against spring 29 and draws valve piston 30 within valve cylinder 31 to close the inlet porting 27 and open exhaust porting 32 and so release fluid from the skirt via pipes 33 and 34.

Figure 13 illustrates a mechanism which could be employed to work in conjunction with the arrangement of Figure 12 used to control for example the arrangements of Figures 5 to 7. Simplistically the device or adjuster 35 would be in the form of a pneumatic/hydraulic ram 36 with simple couple for inlet/exhaust pipes 37, 38 from pipes 28, 38 of Figure 12.

It is to be understood that the foregoing is merely exemplary of apparatus for lining conduits and methods of carrying out such lining in accordance with the invention and that modifications can readily be made thereto without departing from the true scope of the invention. Thus, for example, the pneumatic/hydraulic mechanisms of Figures 11 to 13 could be replaced by equivalent electro/mechanical devices and apparatus.

## Claims

1. Apparatus for providing a hardenable lining to a pipeline having a leakage problem, comprising a tapered skirt device and means for moving same through the pipeline, the skirt device being arranged in to engage with a plug of hardenable material injected into the pipeline and move upstream with respect to the outward tapering skirt, whereby to press the plug against the internal walls of the pipeline, the skirt device having associated means for varying its radial diameter at its outward tapered end.

2. Apparatus as claimed in Claim 1 including means for varying the diameter of the downstream edge of the skirt during lining of a pipeline.

3. Apparatus as claimed in Claim 1 or 2 wherein the skirt is so arranged and disposed as to provide extra lining at outward irregularities in the internal pipe wall.

4. Apparatus as claimed in Claim 1, 2 or 3 including a plunger disposed upstream of the tapered skirt, between which two items is arranged in use the plug of hardenable material, the plunger being arranged to move in association with the skirt device to ensure provision of hardenable material around the periphery of the skirt device from the plug.

5. Apparatus as claimed in any one of the previous claims wherein the skirt device includes an outer tapered skirt wherein at least its outward tapered end is capable of radial expansion and contraction, and means within the outer tapered skirt for activating such radial expansion and contraction.

6. Apparatus as claimed in Claim 5 wherein the means within the outer tapered skirt includes an inner tapered skirt arranged for axial movement within the outer tapered skirt and dimensioned such as to be capable of bearing on at least its outward tapered end for activating such radial expansion and contraction.

7. A method of providing a hardenable lining to a pipeline having a leakage problem comprising injecting into a length of the pipeline a plug of suitable hardenable material and passing through the pipeline from the end containing a majority of the hardenable material a skirt shaped member radially outwardly tapered in the downstream direction, the trailing edge of the skirt having been adjusted to provide a predetermined annular gap with the internal wall of the pipeline.

8. A method as claimed in Claim 7 comprising providing a predetermined lining thickness for the pipeline, and providing extra lining at depressions, joints holes and other outward irregularities in the internal pipe wall.

9. A method as claimed in Claim 7 or Claim 8 wherein the hardenable material is a cement mortar mix, or a polymerised cement mortar mix.
